# EUROPÄISCHE PATENTSCHRIFT

(11) **EP 0 367 287 B1**
(45) Veröffentlichungstag und Bekanntmachung des Hinweises auf die Patenterteilung: **08.06.1994**
(21) Anmeldenummer: 89120398.6
(22) Anmeldetag: 03.11.1989
(51) Int. Cl.: F16K 31/40, F16K 31/385

(54) **Membranventil mit einer von einem Ventildeckel abgestützten elastischen Membrane**
Diaphragm valve with an elastic diaphragm supported by the valve cover
Vanne à diaphragme avec une membrane élastique supportée par le couvercle de vanne

(30) Priorität: 03.11.1988 DE 3837366
(43) Veröffentlichungstag der Anmeldung: 09.05.1990
(73) Patentinhaber: Straub, Hartwig, D-74744 Ahorn (DE)
(72) Erfinder: Straub, Hartwig, D-74744 Ahorn (DE)
(74) Vertreter: Bardehle, Heinz, Dipl.-Ing.

(56) Entgegenhaltungen:
- FR-E- 72 694
- US-A- 2 882 929
- US-A- 3 022 039
- US-A- 4 244 554

## Beschreibung

Die Erfindung bezieht sich auf ein Membranventil mit einer von einem Ventildeckel randseitig dichtend abgestützten, von mindestens einer Ausgleichsbohrung durchsetzten elastischen Membrane, die einen Druckbehälter abschließt und durch Einstellung des beiderseitigen Drucks zwischen dem Ventildeckel und dem Mundstück eines Abblasrohres bewegbar ist, im Schließzustand unter ihr innewohnender Vorspannung gegen das Mundstück dieses abdichtend anliegt und im Öffnungszustand aufgrund eines Überdrucks auf ihrer dem Ventildeckel abgewandten Seite zum Ventildeckel durchgebogen ist, wobei im Öffnungszustand ein der Membrane gegenüber liegendes Loch im Ventildeckel durch ein Steuerventil geöffnet und im Schließzustand geschlossen ist, so daß der Druck im Druckbehälter nur bei geöffnetem Steuerventil die Membrane einseitig beaufschlagt und vom Mundstück abhebt.

Ein derartiges Membranventil ist aus der DE-A-33 03 003 bekannt. Um bei diesem Membranventil der Membrane den notwendigen Spielraum zu geben, besitzt der Ventildeckel eine das Loch im Ventildeckel umgebende Vertiefung, die in eine ringartig umlaufende Erhöhung gegenüber der daran anschließenden Ventildeckeloberfläche übergeht. Diese ringartige Erhöhung am Ventildeckel drückt im Schließzustand des Membranventils die Membrane gegen das Mundstück des Abblasrohres, während im Öffnungszustand aufgrund des durch das Steuerventil geöffneten Loches im Ventildeckel der Druck im Druckbehälter die Membrane in die Vertiefung im Ventildeckel drückt, womit die Membrane vom Mundstück abgehoben wird.

Weiterhin ist in der FR-A-1,186,275 ein Ventil beschrieben, bei dem über ein in einen Druckbehälter hineinragendes Mundstück eine im Ventilgehäuse eingespannte Membran zwecks Absperrung dieses Mundstücks mittels Druckbeaufschlagung aufgedrückt werden kann.

Der Erfindung liegt die Aufgabe zugrunde, das in Rede stehende Membranventil, das als Massenartikel anzusprechen ist, konstruktiv zu vereinfachen. Erfindungsgemäß geschieht dies dadurch, daß der Ventildeckel auf seiner der Membrane zugewandten Seite als im wesentlichen ebene Platte ausgebildet und die Membrane auf ihrer dem Ventildeckel zugewandten Seite mit einem zum Mundstück koaxial angeordneten Kragen versehen ist, um den sich die Membrane beim Öffnen und Schließen durchbiegt bzw. ausrichtet.

Aufgrund der Gestaltung der Membrane mit dem koaxialen Kragen wird der der Membrane zu gebende Bewegungsspielraum von dem Ventildeckel weg verlagert, so daß der Ventildeckel als ebene Platte ausgebildet werden kann, was eine wesentliche konstruktive Vereinfachung dieses Teils darstellt. Die besondere Gestaltung der Membrane spielt dabei keine Rolle, da es sich bei dieser um ein in üblicher Weise zu spritzendes oder zu vulkanisierendes Formteil aus einem elastischen Kunststoff oder Kautschuk handelt, für dessen Herstellung in jedem Falle eine angepaßte Form erforderlich ist.

Für den in die Membrane einbezogenen Kragen gibt es verschiedene Gestaltungsmöglichkeiten. So kann man die Membrane auf ihrer dem Ventildeckel zugewandten Seite mit einem Vorsprung versehen, um den sich die Membrane beim Öffnen und Schließen durchbiegt bzw. ausrichtet. Der Vorsprung bildet dabei gleichzeitig die Abdichtung der Membrane gegenüber dem Ventildeckel. Es ist aber auch möglich, den Kragen als Ringstufe auszubilden, so daß sich aufgrund der Topfwand ein Abstand der eigentlichen Membrane von der ihr zugewandten Oberfläche des Ventildeckels ergibt.

Zweckmäßig besitzt die Membrane im Bereich des Mundstücks eine Verstärkung, wodurch der die Elastizität des Membranmaterials ausnutzende Bereich radial vom Mundstück weg nach außen verlagert wird. Im Bereich des Mundstücks kann sich dann die Membrane praktisch durchbiegungsfrei an diese anlegen und abdichten.

In den Figuren sind Ausführungsbeispiele der Erfindung dargestellt. Es zeigen:
Fig. 1 und 2 ein Membranventil, bei dem die Membrane mit einem Ringwulst versehen ist, und zwar im Schließ- und im Öffnungszustand.
Figur 3 und 4 ein Membranventil mit einer Membrane, die einen kragenartig ausgebildeten Vorsprung besitzt, und zwar ebenfalls im Schließ- und Öffnungszustand.

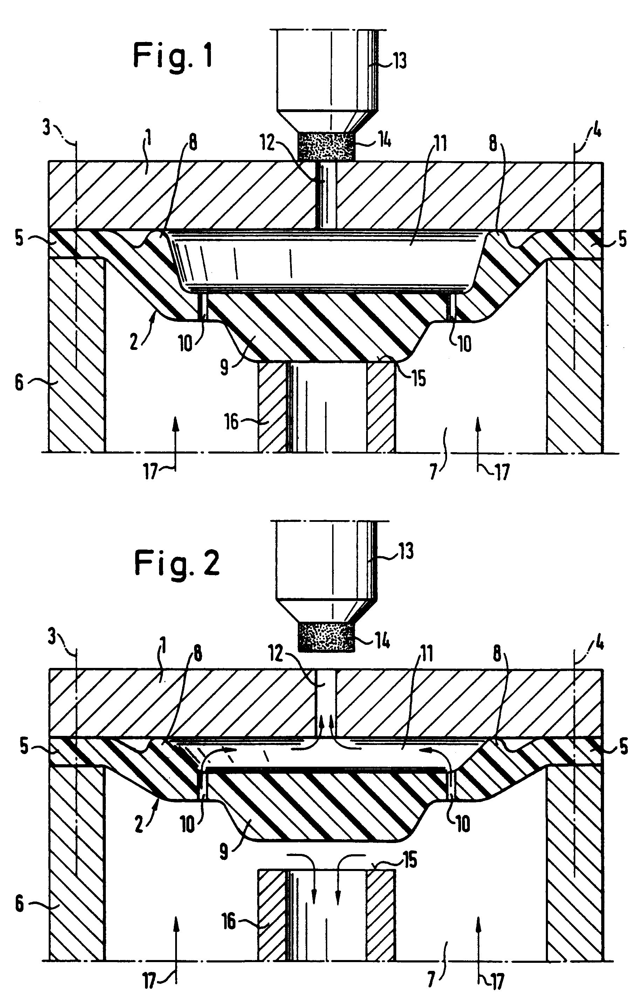

Das in der Figur 1 dargestellte Membranventil besteht aus dem Ventildeckel 1 und der elastischen Membrane 2, die am Rand des Ventildeckels 1 abgestützt und hier durch Befestigungselemente befestigt ist, die durch die strichpunktierten Linien 3 und 4 angedeutet sind. Es kann sich dabei um durchgehende Schrauben handeln, die den Rand 5 der Membrane 2 durchsetzen und in die Wandung eines Druckbehälters 6 eingedreht sind. Der Druckbehälter 6 ist hier nur mit seinem dem Membranventil zugewandten Teil dargestellt, sein Innenraum ist mit 7 bezeichnet. Auf diese Weise wird erreicht, daß sich im Bereich des Randes 5 der Membrane 2 eine Abdichtung sowohl des Druckbehälters 6 gegenüber der Membrane 2 als auch zwischen dieser und dem Ventildeckel 1 ergibt.

Die Membrane 2 ist mit dem aus ihr herausragenden Ringwulst 8 versehen, der einstückig mit der Membrane 2 gestaltet ist. Es handelt sich dabei um ein aus elastischem Kunststoff gespritztes Teil oder ein aus Kautschuk vulkanisiertes Teil. Die Membrane 2 ist in ihrem mittleren Bereich als Verstärkung 9 ausgebildet, wodurch ihr in diesem Bereich weitgehend ihre Elastizität genommen ist. Im Bereich zwischen der Verstärkung 9 und dem Ringwulst 8 weist die Membrane 2 mehrere Ausgeichsbohrungen 10 auf, die es ermöglichen, daß das im Druckbehälter 6 befindliche Druckmedium über die Ausgleichsbohrung 10 in den Zwischenraum 11 zwischen der Membrane 2 und dem Ventildeckel 1 gelangen kann.

Im Ventildeckel 1 ist das der Membrane 2 gegenüber liegende Loch 12 vorgesehen, das dazu dient, eine Verbindung vom Zwischenraum 11 zu der Umgebung des Membranventils herzustellen, je nachdem ob das Steuerventil 13 mit seiner Dichtung 14 das Loch 12 abdichtet oder nicht.

Figur 1 zeigt das Membranventil im Schließzustand, in dem die Membrane 2 gegen das Mundstück 15 des Abblasrohres 16 anliegt. In diesem Schließzustand dichtet das Steuerventil 13 mit einer Dichtung 14, wie dargestellt, das Loch 12 ab, so daß der durch die Pfeile 17 angedeutete Druck sich über die Ausgleichsbohrungen 10 in den Zwischenraum 11 erstrecken kann. Auf die beiden Seiten der Membrane 2 wirkt somit der gleiche Druck, sodaß sich die Membrane 2 aufgrund einer ihr innewohnenden Vorspannung, die ihr durch die Montage gegeben ist, gegen das Mundstück 15 des Abblasrohres 16 dichtend anlegt und dieses damit abschließt. Bei der Montage der Membrane 2 wird diese nämlich mit ihrem Rand 5 um den Ringwulst 8 in Richtung auf den Ventildeckel 1 gebogen, womit sich aufgrund der Elastizität des Membranmaterials eine Vorspannung in der Membrane 2 ergibt, die diese, wie gesagt, gegen das Mundstück 15 des Abblasrohres 16 drückt.

In Figur 2 ist das gleiche Membranventil im Öffnungzustand dargestellt. In diesem Zustand ist das Steuerventil 13 mit seiner Dichtung 14 von dem Loch 12 abgehoben, sodaß der Druck aus dem Zwischenraum 11 gemäß den eingezeichneten Pfeilen im Loch 12 an die Umgebung entweichen kann. Aufgrund des geringen Querschnittes der Ausgleichsbohrungen 10 ergibt sich bei diesem Druckausgleich auf dem Wege vom Innenraum 7 durch die Ausgleichsbohrungen 10 in den Zwischenraum 11 und danach durch das Loch 12 ein Druckabfall, der im Druckbehälter 6 zu einem Überdruck gegenüber dem Druck im Zwischenraum 11 führt, sodaß sich die Membrane 2 unter der Wirkung dieses Überdruckes in Richtung auf den Ventildeckel 1 durchbiegt. Dabei hebt sich die Membrane 2 vom Mundstück 15 des Abblasrohres 16 ab, womit das Membranventil geöffnet ist. Bei dieser Bewegung der Membrane 2 biegt sich diese weiterhin um den Ringwulst 8 durch, womit sich die Vorspannung in der Membrane 2 weiterhin erhöht, die allerdings durch den auf die Membrane 2 vom Innenraum 7 her wirkenden Überdruck ausgeglichen wird. Der gegenüber dem Querschnitt der Ausgleichsbohrungen 10 wesentlich größere Querschnitt des Loches 12 sorgt dabei dafür, daß bei abgehobenem Steuerventil 13 die für das Abheben der Membrane 2 verantwortlichen Druckverhältnisse auf ihren beiden Seiten ständig aufrecht erhalten werden.

Wie ersichtlich besteht der Ventildeckel 1 lediglich aus einer auf der der Membrane 2 zugewandten Seite ebenen Platte, die in üblicher Weise aus Metall, insbesondere Aluminium, hergestellt wird. Es handelt sich dabei also um ein sehr einfach herzustellendes Bauteil.

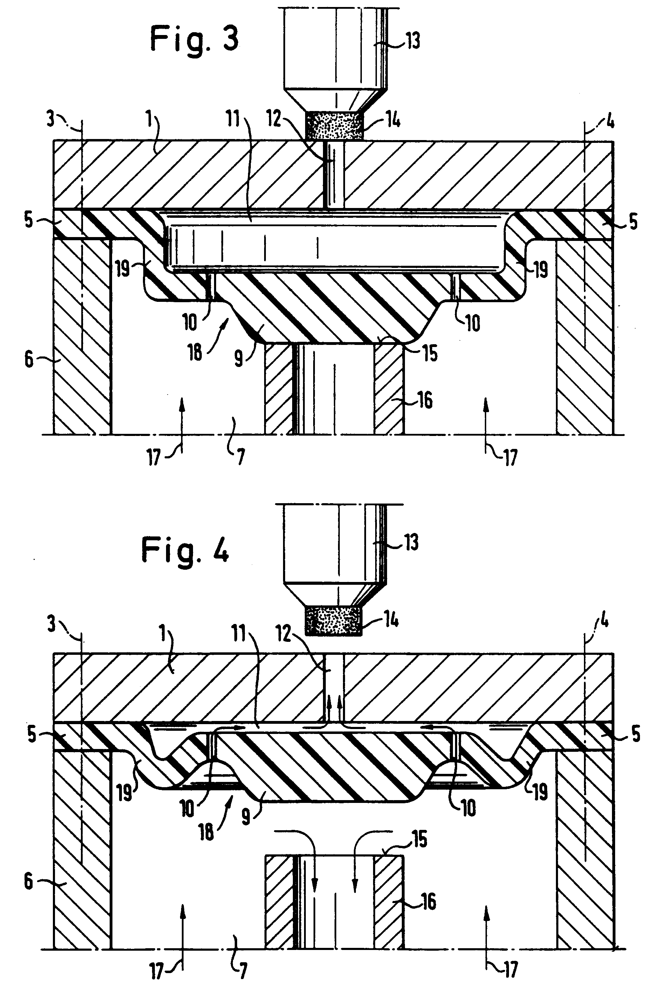

Figuren 3 und 4 zeigen eine Abwandlung der in der Figur 1 und 2 dargestellten Membrane. Die sonstigen Teile des Mebranventils sind in gleicher Weise ausgestaltet wie bei der Ausführungsform gemäß Figur 1 und 2, sodaß hierfür auch die gleichen Bezugszeichen verwendet werden. Die Funktion des jeweiligen Membranventils ist ebenfalls in beiden Fällen gleich.

Das Membranventil gemäß den Figuren 3 und 4 besitzt hier die Membrane 18, die im Bereich zwischen der Verstärkung 9 und dem Rand 5 ein kragenartiges Ringteil 19 aufweist, das der Membrane 18 die erforderliche Elastizität für das Abheben vom Abblasrohr 16 und das Wiederanlegen gibt.

In der die Schließstellung des Membranventils zeigenden Figur 3 ist das Ringteil 19 gestreckt dargestellt. In der die Öffnungsstellung zeigenden Figur 4 ist das Ringteil 19 umgestülpt gezeichnet, in welcher Lage es gegen seine dabei aufgebaute innere Vorspannung durch den Überdruck auf der Seite des Innenraumes 7 gehalten wird.

## Patentansprüche

1. Membranventil mit einer von einem Ventildeckel (1) randseitig dichtend abgestützten, von mindestens einer Ausgleichsbohrung durchsetzten elastischen Membrane (2), die einen Druckbehälter (6) abschließt und durch Einstellung des beiderseitigen Drucks zwischen dem Ventildeckel (1) und dem Mundstück (15) eines Abblasrohres (16) bewegbar ist, im Schließzustand unter ihr innewohnender Vorspannung gegen das Mundstück (15) dieses abdichtend anliegt und im Öffnungszustand aufgrund eines Überdrucks auf ihrer dem Ventildeckel (1) abgewandten Seite zum Ventildeckel (1) durchgebogen ist, wobei im Öffnungszustand ein der Membrane (2) gegenüber liegendes Loch (12) im Ventildeckel (1) durch ein Steuerventil (13) geöffnet und im Schließzustand geschlossen ist, so daß der Druck im Druckbehälter (6) nur bei geöffnetem Steuerventil (13) die Membrane (2) einseitig beaufschlagt und vom Mundstück (15) abhebt, **dadurch gekennzeichnet,** daß der Ventildeckel (1) auf seiner der Membrane (2) zugewandten Seite als im wesentlichen ebene Platte ausgebildet und die Membrane (2,18) auf ihrer dem Ventildeckel (1) zugewandten Seite mit einem zum Mundstück (15) koaxial angeordneten Kragen (8,19) versehen ist, um den sich die Membrane (2) beim Öffnen und Schließen durchbiegt bzw. ausrichtet.

2. Membranventil nach Anspruch 1, **dadurch gekennzeichnet,** daß der Kragen als aus der Membrane (2) herausragender Ringwulst (8) ausgebildet ist.

3. Membranventil nach Anspruch 1, **dadurch gekennzeichnet,** daß der Kragen (19) als Ringstufe ausgebildet ist.

4. Membranventil nach einem der Ansprüche 1 bis 3, **dadurch gekennzeichnet,** daß die Membrane (2,18) im Bereich des Mundstückes eine Verstärkung (9) besitzt.

## Claims

1. Diaphragm valve with an elastic diaphragm (2) having at least one balancing passage through it and supported in a sealed manner at the edge by a valve cover (1), wherein said elastic diaphragm seals off a pressure vessel (6) and may be moved by adjusting the pressure on both sides between the valve cover (1) and the orifice (15) of a blow-off pipe (16), bears against the orifice (15) in the closed position by its inherent initial tension to seal it and sags towards the valve cover (1) in the open position owing to an overpressure on the side away from the valve cover (1), a hole (12) in the valve cover (1) opposite the diaphragm (2) being opened by a control valve (13) in the open position and being closed in the closed position so that the pressure in the pressure vessel (6) bears on one side of the diaphragm (2) and lifts it off this orifice (15) only when the control valve (13) is open, characterised in that the valve cover (1) is designed on its side towards the diaphragm (2) as an essentially flat plate and the diaphragm (2, 18) is provided on its side towards the valve cover (1) with a collar (8, 19) arranged coaxially with the orifice (15), and about which the diaphragm (2) bows and flattens on opening and closing.

2. Diaphragm valve according to claim 1, characterised in that the collar is designed as an annular ring (8) projecting from the diaphragm (2).

3. Diaphragm valve according to claim 1, characterised in that the collar (19) is designed as an annular shoulder.

4. Diaphragm valve according to one of claims 1 to 3, characterised in that the diaphragm (2, 18) has a bulge (9) in the region of the orifice.

## Revendications

1. Soupape à diaphragme comprenant un diaphragme élastique (2) dont le bord prend appui de manière étanche sur un couvercle de soupape (1), qui est traversé par au moins un perçage d'équilibrage, qui ferme un récipient sous pression (6), qui peut être déplacé en réglant la pression régnant de part et d'autre entre le couvercle de soupape (1) et l'orifice (15) d'un tube d'évacuation (16), et qui, en position fermée, est appliqué de manière étanche contre l'orifice (15) dudit tube d'évacuation (16) sous l'effet de sa précontrainte propre et, en position ouverte, s'affaisse en direction du couvercle de soupape (1) sous l'effet d'une surpression régnant sur son côté opposé au couvercle de soupape (1), un trou (12) pratiqué en face du diaphragme (2) dans le couvercle de soupape (1) étant ouvert par une soupape de commande (13) en position ouverte et étant fermé en position fermée, de sorte que la pression régnant à l'intérieur du récipient sous pression (6) ne sollicite le diaphragme (2) sur un côté et ne le décolle de l'orifice (15) que lorsque la soupape de commande (13) est ouverte, **caractérisée en ce que** le couvercle de soupape (1) se présente, sur son côté tourné vers le diaphragme (2), sous la forme d'une plaque sensiblement plane, et le diaphragme (2, 18) est pourvu, sur son côté tourné vers le couvercle de soupape (1), d'un collet (8, 19) qui est disposé coaxialement à l'orifice (15) et qui détermine l'affaissement ou le positionnement du diaphragme (2) lors de l'ouverture et de la fermeture.

2. Soupape à diaphragme selon la revendication 1, **caractérisée en ce que** le collet se présente sous la forme d'un bourrelet annulaire (8) qui dépasse du diaphragme (2).

3. Soupape à diaphragme selon la revendication 1, **caractérisée en ce que** le collet (19) se présente sous la forme d'un étage annulaire.

4. Soupape à diaphragme selon l'une des revendications 1 à 3, **caractérisée en ce que** le diaphragme (2, 18) possède un renfort (9) dans la zone de l'orifice.
